**Europäisches Patentamt**

**European Patent Office**

**Office européen des brevets**

(19)

(11) Numéro de publication: **0 010 339**
**B1**

(12) ## FASCICULE DE BREVET EUROPEEN

(45) Date de publication du fascicule du brevet: **02.11.83**

(51) Int. Cl.³: **H 02 K 1/18, F 16 B 5/00**

(21) Numéro de dépôt: **79200601.7**

(22) Date de dépôt: **19.10.79**

(54) Stator pour machine électrique rotative et machine électrique rotative équipée d'un tel stator.

(30) Priorité: **25.10.78 FR 7830277**

(43) Date de publication de la demande:
**30.04.80 Bulletin 80/9**

(45) Mention de la délivrance du brevet:
**02.11.83 Bulletin 83/44**

(84) Etats contractants désignés:
**AT BE CH DE FR GB IT LU NL SE**

(56) Documents cités:
**FR - A - 952 055**
**FR - A - 1 355 295**
**GB - A - 467 151**
**US - A - 1 467 339**
**US - A - 2 662 988**

(73) Titulaire: **ATELIERS DE CONSTRUCTIONS ELECTRIQUES DE CHARLEROI (ACEC) Société Anonyme**
**Avenue Lloyd George 7**
**B-1050 Bruxelles (BE)**

(72) Inventeur: **Persyn, Raymond**
**Rue Vandervelde**
**6160 Roux-31 (BE)**

(74) Mandataire: **Bossard, Franz et al,**
**ACEC - Service des Brevets Boîte Postale 4**
**B-6000 Charleroi (BE)**

Courier Press, Leamington Spa, England.

Stator pour machine électrique rotative et machine électrique rotative équipée d'un tel stator

La présente invention est relative à un mode de construction de machine électrique rotative et plus particulièrement à une disposition spéciale permettant son assemblage et sa fixation ou suspension.

Il a déjà été proposé de constituer une machine électrique rotative par la juxtaposition de part et d'autre de la masse magnétique statorique d'une boîte côté collecteur et d'une boîte côté ventilateur, les trois éléments étant rendus solidaires.

En particulier, les brevets US—A— 1 446 898, BE—A—444 806 et FR—A— 952 055, ainsi que le brevet US—A— 1 467 339 décrivent tous une machine électrique rotative dont le stator est formé d'un paquet de tôles magnétiques qui sont pressées l'une sur l'autre par des plateaux ou anneaux transversaux, l'effet de pression étant obtenu par serrage sur des barres ou tiges parallèles à l'axe longitudinal de la machine, traversant le paquet de tôles magnétiques statoriques et les plateaux ou anneaux transversaux.

Dans les brevets US—A—1 446 898, BE— A—444 806 et FR—A—952 055, le stator ainsi constitué est contenu complètement dans une caracasse fermée métallique qui est formée soit d'une portion centrale et deux chambres terminales à chaque bout de la machine (brevet FR—A—952055), soit de deux demi-coquilles qui se rejoignent dans le plan médian (brevets US—A—1 446 898 et BE—A—444 806). Dans le brevet US—A—1 467 339, le paquet de tôles magnétiques statoriques constitue lui-même la portion centrale de la machine électrique rotative.

Suivant la présente invention, le perfectionnement recherché est d'utiliser également les barres parallèles à l'axe longitudinal de la machine pour assurer la fixation ou la suspension de celle-ci.

Suivant l'invention, la machine électrique rotative comprenant un stator, formé de tôles magnétiques statoriques enfilées sur des barres longitudinales parallèles à l'axe de la machine et pressées entre deux plateaux terminaux, et des chambres d'extrémité également fixées par les dites barres longitudinales caractérisée en ce qu'au moins une barre longitudinale présente plusieurs portées réparties, de part et d'autre par rapport au plan médian de la machine, en des diamètres différents et porte à chaque réduction de diamètre des filets extérieurs pour des écrous correspondants, en ce que sur le diamètre le plus grand de la dite barre longitudinale sont enfilées les tôles magnétiques statoriques et les plateaux terminaux maintenus en compression par des écrous visés sur les parties filetées correspondantes, en ce que les chambres d'extrémité sont solidarisées avec la dite baree longitudinale par enfilage sur les portées à diamètres intermédiaires et par serrage contre les plateaux terminaux au moyen des écrous et en ce que les diamètres les plus petits de la barre longitudinale font saillie en dehors des chambres d'extrémité et sont conformés pour s'adapter directement à la fixation ou à la suspension de la machine.

L'invention sera décrite dans ce qui suit, en référence aux dessins annexés qui représentent respectivement:

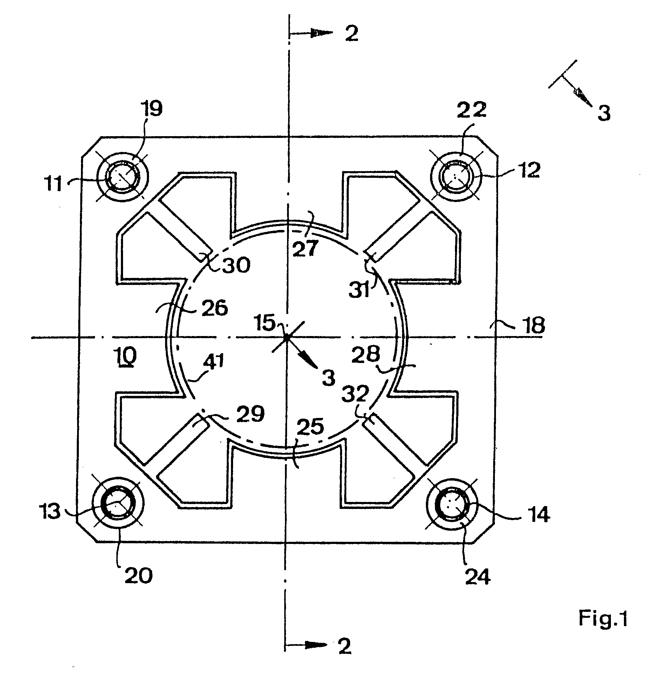

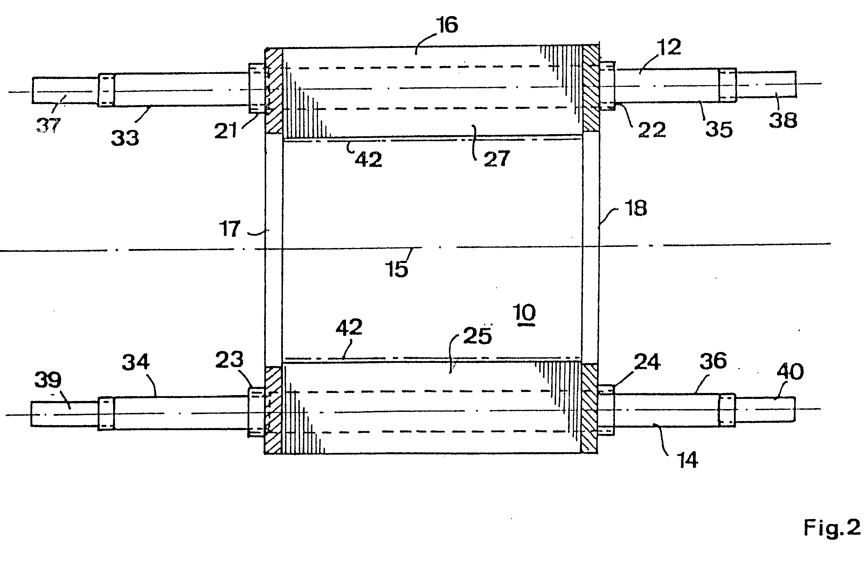

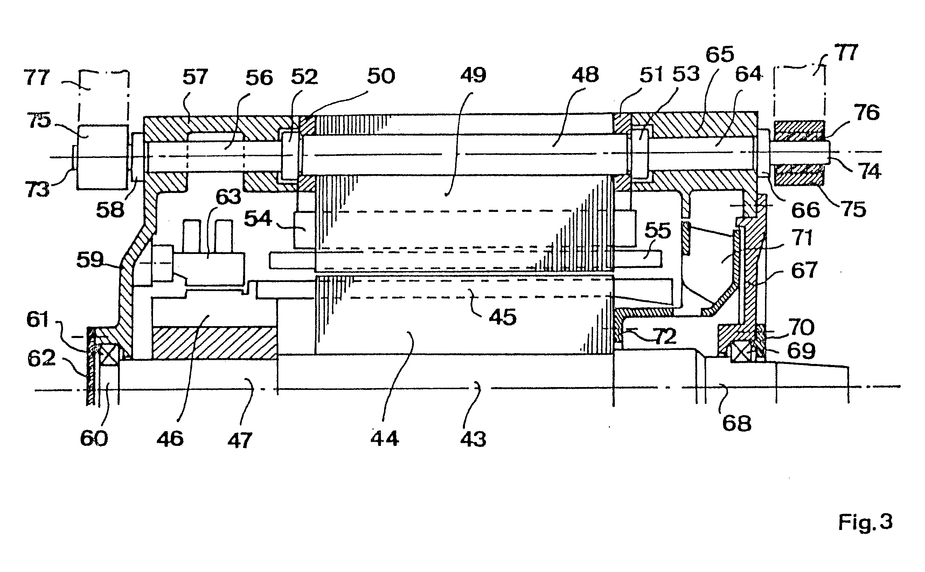

— en figure 1, une vue en bout,
— en figure 2, une vue en coupe, suivant le plan 2—2 de la figure 1, de la partie magnétique d'un stator non bobiné;
— en figure 3, une demi-vue en coupe suivant le plan 3—3 de la figure 1, d'une machine électrique comprenant un stator suivant les figures 1 et 2, les enroulements électriques statoriques et rotoriques étant indiqués schématiquement ainsi que leurs connexions.

En outre dans la figure 3, les détails de construction ont été négligés pour la clarté du dessin.

En référence aux figures 1 et 2, 10 désigne la partie magnétique du stator qui est montée sur quatre barres longitudinales 11, 12, 13 et 14. Ces barres longitudinales 11 à 14 présentent chacune plusieurs portées et sont disposées dans le plan de la figure 1, aux sommets d'un carré par rapport à une section transversale du stator et leur axe, comme le montre la figure 2, est parallèle à l'axe longitudinal 15 du stator. Les tôles magnétiques statoriques 16 sont enfilées sur la portée centrale des barres longitudinales 11 à 14 et sont pressées les unes contre les autres par deux plateaux terminaux transversaux 17 et 18. Après pressage les plateaux terminaux transversaux 17 et 18 sont maintenus en place par des écrous tels que 19 et 20, respectivement pour les barres longitudinales 11 et 13, 21 et 22, pour la barre longitudinale 12 et 23 et 24, pour la barre longitudinale 14.

Dans l'exemple illustré de façon à présenter des pôles principaux 25, 26, 27 et 28 et des pôles auxiliaires 29, 30, 31 et 32 (voir notamment la figure 1). Les deux plateaux terminaux transversaux 17 et 18 présentent des découpes légèrement plus grandes que celles des tôles magnétiques statoriques 16, de façon à dégager les pôles principaux 25 à 28 et les pôles auxiliaires 29 à 32, pour permettre le placement des enroulements électriques statoriques et le raccordement de ceux-ci. Dans l'exemple illustré, comme le montre la figure 1, les deux plateaux terminaux transversaux 17 et 18 sont découpés de telle manière qu'ils dégagent complétement les pôles auxiliaires 29, 30, 31 et 32.

En référence à la figure 2, les barres longitudinales, dont seules les barres 12 et 14 sont visibles sur les dessin, présentent respectivement des portées 33 et 34 destinées à supporter les chambres latérales d'une machine électrique, la partie centrale de celle-ci étant simplement constituée par le stator suivant l'invention, bobiné et imprégné.

Dans l'illustration suivant la figure 2, les portées des barres longitudinales telles que 33 et 34 sont destinées à supporter la chambre côté collecteur de la machine électrique, tandis que les portées telles que 35 et 36 sont destinées à supporter la chambre côté ventilateur de la même machine. D'autres portées terminales des barres longitudinales, telles que 37, 38, 39 et 40 sont destinées à fixer ou à suspendre la machine électrique. Il est évident que, dans un souci de rationalisation, toutes les barres longitudinales peuvent présenter de telles portées de fixation ou de suspension, ou que, par contre, par suite d'exigences constructives, une partie de celles-ci seulement en sont munies.

Dans les figures 1 et 2, le gabarit d'encombrement du rotor devant coopérer avec le stator représenté est indiqué par un trait mixte 41 circulaire sur la figure 1 et 42 sur la figure 2.

En référence à la figure 3, qui, comme il a été dit plus haut, représente une demi-vue en coupe d'une machine électrique comprenant un stator suivant les figures 1 et 2, les enroulements électriques statoriques et rotoriques étant indiqués schématiquement ainsi que leurs connexions, 43 désigne l'arbre de la machine qui supporte à sa partie centrale les tôles magnétiques rotoriques 44. Dans ces tôles magnétiques rotoriques 44 sont logés des enroulements électriques rotoriques 45 qui sont connectés à un collecteur 46 fixé sur la portée 47 de l'arbre 43.

Dans l'exemple illustré à la figure 3, la machine électrique est supposée suspendue à une seule barre longitudinale 48. Celle-ci supporte à sa partie centrale les tôles magnétiques statoriques 49, qui sont pressées entre deux plateaux terminaux transversaux 50 et 51, qui sont bloqués sur la barre longitudinale 48 par les écrous 52 et 53. Les tôles magnétiques statoriques 49 servent de support aux enroulements électriques statoriques 54 et 55. La barre longitudinale 48 présente des portées qui font saillie de part et d'autre des plateaux terminaux transversaux 50 et 51.

La portée 56 de la barre longitudinale 48 sert de support à la chambre côte collecteur 57 de la machine électrique; cette chambre côté collecteur 57 est rendue solidaire de la tige longitudinale 48 par un écrou 58. Elle comprend un flasque 59 qui prend appui sur une portée 60 de l'arbre 43, par l'intermédiaire d'un roulement 61. Un plateau 62 obture le logement du roulement 61.

Le flasque 59 de la chambre côté collecteur 57 sert de support à une porte balais 63 qui est disposé en corrélation avec le collecteur 46.

De l'autre côté de la masse des tôles magnétiques statoriques 49, la portée 64 de la tige longitudinale 48 sert de support à la chambre côté ventilateur 65 de la machine électrique; cette chambre côté ventilateur 65 est rendue solidaire de la barre longitudinale 48 par un écrou 66. Elle comprend un flasque 67 dui prend appui sur une portée 68 de l'arbre 43, par l'intermédiaire d'un roulement 69. Un plateau 70 obture le logement du roulement 69.

Le flasque 67 de la chambre côté ventilateur 65 ferme un espace pour le logement du ventilateur 71 qui est rendu solidaire de la masse des tôles magnétiqes rotoriques en 72 par un moyen convenable.

Il est évident que la chambre côté collecteur 57 est prévue avec des ouvertures permettant l'accès aux connections des enroulements électriques statoriques 54 et 55, ainsi qu'au portebalais 63. De même, la chambre côté collecteur 57 et la chambre côté ventilateur 65 sont prévues avec les ouvertures ou des ouïes permettant la ventilation du rotor et du stator de la machine électrique sous l'action du ventilateur 71.

La barre longitudinale 48 présente en outre, de part et d'autre de la masse des tôles magnétiques statoriques 49, deux saillies 73 et 74; qui sont destinées à recevoir les dispositifs de suspension de la machine électrique. Ceux-ci sont par exemple, constitués par un carcan ou un collier 75, enserrant un silentbloc 76, rendu solidaire du châssis 77 sur lequel est attaché la machine électrique.

**Revendication**

Machine électrique rotative comprenant un stator formé de tôles magnétiques statoriques (16; 49) enfilées sur des barres longitudinales (11, 12, 13, 14; 48) parallèles à l'axe de la machine et pressées entre deux plateaux terminaux (17 et 18; 50 et 51), et des chambres d'extrémité (57 et 65) également fixées par les dites barres longitudinales (11, 12, 13, 14; 48), caractérisée en ce qu'au moins une barre longitudinale (11, 12, 13, 14; 48) présente plusieurs portées (33—40; 56, 64, 73, 74) réparties, de part et d'autre par rapport au plan médian de la machine, en des diamètres différents et porte à chaque réduction de diamètre des filets extérieurs pour des écrous correspondants (21, 22, 23, 24; 52, 53; 58, 66), en ce que sur le diamètre la plus grand de la dite barre longitudinale (11, 12, 13, 14; 48) sont enfilées les tôles magnétiques statoriques (16; 49) et les plateaux terminaux (17 et 18; 50 et 51) maintenus en compression par des écrous (21, 22, 23, 24; 52 et 53) visés sur les portées filetées correspondantes, en ce que les chambres d'extrémité (57 et 65) sont solidarisées avec la dite barre longitudinale (11, 12, 13, 14; 48) par enfilage sur les portées à diamètres intermédiaires (33, 34, 35, 36; 56 et 64) et par serrage contre les plateaux à terminaux (17, 18; 50 et 51) au moyen d'écrous (58 et 66) et en ce que les diamètres les plus petits de la barre longitudinale (11, 12, 13, 14; 48) font saillie en dehors des chambres d'extrémité (57 et 65) et sont conformés pour s'adapter directement à la fixation ou à la suspension de la machine.

## Patentanspruch

Umlaufende eletrische Maschine mit einem Stator, der von magnetischen Statorblechen (16; 49) gebildet wird, die auf Längsstäben (11, 12, 13, 14; 48) parallel zur Achse der Maschine aufgefädelt und zwischen zwei Abschlussplatten (17 und 18; 50 und 51) gepresst sind, wobei Endkammern (57 und 65) gleichfalls auf den gennanten Längsstäben (11, 12, 13, 14; 48) befestigt sind, dadurch gekennzeichnet, dass wenigstens ei Längsstab (11, 12, 13, 14; 48), beidseitig in bezug auf die Mittenebene der Maschine verteilt, mehrere Bereiche (33—40, 56, 64, 73, 74) mit unterschiedlichen Durchmessern aufweist und bei jeder Durchmesserverminderung Aussengewinde für entsprechende Schrauben (21, 22, 23, 24; 52, 53; 58, 66) trägt, und dass auf dem grössten Durchmesser des gennanten Längsstabes (11, 12, 13, 14; 48) die magnetischen Statorbleche (16; 49) und die Abschlussplatten (17 und 18, 50 und 51) aufgefädelt und durch Schrauben (21, 22, 23, 24; 52 und 53), zusammengepresst gehalten sind, die auf die mit entsprechendem Gewinde versehenen Bereiche aufgeschraubt sind, und dass die Endkammern (57 und 65) durch auffädeln auf die Bereiche (33, 34, 35, 36; 56 und 64) mit dazwischen liegenden Durchmessern und durch Anpressen an die Abschlussplatten (17, 18; 50 und 51) mittels Schrauben (58 und 66) mit dem genannten Längsstab (11, 12, 13, 14; 56 und 64) vereinigt sind, und dass die kleinsten Durchmesser des Längsstabes (11, 12, 13, 14; 48) ausserhalb der Endkammern (57 und 65) Vorsprünge bilden und eine Form aufweisen, die eine unmittelbare Anpassung an die Befestigung oder Aufhängung der Maschine Ermöglicht.

## Claim

Rotating electric machine comprising a stator made of magnetic stator laminations (16, 49) threaded onto longitudinal rods (11, 12, 13, 14; 48) parallel to the axis of the machine and clamped between two end plates (17 and 18; 50 and 51), and end chambers (57 and 65) which are also fixed by the said longitudinal rods (11, 12, 13, 14; 48), characterised in that at least one longitudinal rod (11, 12, 13, 14; 48) presents several journals (33—40; 56, 64, 73, 74) with different diameters, arranged on one side and on the other with respect to the median plane of the machine, and has at each reduction in diameter external threads for corresponding nuts (21, 22, 23, 24; 52, 53; 58, 66), and in that on the largest diameter of the said longitudinal rod (11, 12, 13, 14; 48) are threaded the magnetic stator laminations (16, 49) and the end plates (17 and 18; 50 and 51) held in compression by nuts (21, 22, 23, 24; 52 and 53) screwed onto the corresponding threaded journals, and in that the end chambers (57 and 65) are firmly fixed to the longitudinal rod (11, 12, 13, 14; 48) by threading onto the intermediate diameter journals (33, 34, 35, 36; 56 and 64) and by tightening against the end plates (17, 18; 50 and 51) by means of nuts (58 and 66) and in that the smallest diameters of the longitudinal rod (11, 12, 13, 14; 48) project outside the end chambers (57 and 65) and are shaped to be directly suitable for the fixing or the suspension of the machine.

0 010 339

Fig.1

Fig.2

Fig.3

0010339